# EUROPEAN PATENT SPECIFICATION

(11) **EP 2 368 820 B1**
(45) Date of publication and mention of the grant of the patent: **27.01.2016**
(21) Application number: 11157560.1
(22) Date of filing: 09.03.2011
(51) Int. Cl.: B65G 49/06

(54) **METHOD OF REMOVING SPACERS OFF A SHEET OF GLASS, PICKUP ASSEMBLY FOR IMPLEMENTING THE METHOD, AND SHEET GLASS PICKUP AND HANDLING DEVICE EQUIPPED WITH SUCH A PICKUP ASSEMBLY**
VERFAHREN ZUR ENTFERNUNG VON ABSTANDHALTERN AUF EINER GLASPLATTE, AUFNAHMEANORDNUNG ZUR DURCHFÜHRUNG DES VERFAHRENS UND PLATTENGLASAUFNAHME- UND BEHANDLUNGSVORRICHTUNG MIT DER AUFNAHMEANORDNUNG
PROCÉDÉ POUR ENLEVER DES INTERCALAIRES D'UNE FEUILLE DE VERRE, APPAREIL D'ENLÈVEMENT POUR APPLIQUER LE PROCÉDÉ ET DISPOSITIF DE SAISE ET DE MANIEMENT DE FEUILLES DE VERRE ÉQUIPÉ D'UN TEL ENSEMBLE D'ENLÈVEMENT

(30) Priority: 09.03.2010 IT TO20100180
(43) Date of publication of application: 28.09.2011
(73) Proprietor: Bottero S.p.A., 12100 Cuneo (IT)
(72) Inventor: Boggero, Enrico, 12100 Cuneo (IT); Bottero, Francesco, 12010 Vinadio (IT); Gerbaudo, Mariano, 12100 Cuneo (IT)
(74) Representative: Bergadano, Mirko

(56) References cited:
- EP-A1- 1 695 928
- EP-A1- 2 070 848
- DE-A1- 1 531 970
- FR-A1- 2 823 189
- US-A- 5 632 595
- US-A- 5 669 602

## Description

The present invention relates to a method of removing spacers off a sheet of glass.

As is known, spacers, normally in the form of elongated strips of paper material or similar, are inserted between sheets of glass, or more commonly between packs of glass sheets, to keep the adjacent sheets apart and simplify pickup and transfer of the packs.

At present, the spacers are removed manually by a sheet handling operative, or using powered devices comprising a sweep-off device, which sweeps the spacers laterally off the sheets and onto the floor.

Both the above methods have drawbacks : manual removal takes time and poses safety problems because of the presence of an operative in the sheet pickup and removal area; and sweep-off devices invariably result in pileup of the spacers at the base of the sheet supporting structures, which obstructs pickup and removal of the sheets, especially when these are supported on movable racks.
Apparatus for handling glass sheet are disclosed, for example, in EP 2 070 848 or in US 5,632,595.

It is an object of the present invention to provide a method of removing spacers off a sheet of glass, designed to provide a simple, low-cost solution to the above drawbacks.

According to the present invention, there is provided a method of removing spacers off a main surface of a sheet of glass, as claimed in claim 1.

The present invention also relates to a pickup assembly for removing spacers off a sheet of glass.

According to the present invention, there is provided a pickup assembly for removing spacers off a main surface of a sheet of glass, as claimed in claim 5.

The present invention also relates to a sheet glass pickup and handling device.

According to the present invention, there is provided a sheet glass pickup and handling device as claimed in Claim 12.

A non-limiting embodiment of the present invention will be described by way of example with reference to the accompanying drawings, in which :
Figure 1 shows a side view of a sheet glass pickup and handling device in accordance with the teachings of the present invention;
Figure 2 shows a rear view of the Figure 1 device;
Figures 3 and 4 show, respectively, a front and rear view in perspective of a pickup assembly of the Figure 1 and 2 device, in accordance with the present invention;
Figure 5 shows a larger-scale detail of Figures 3 and 4;
Figures 6 and 7 show side views of the Figure 3 and 4 pickup assembly in two different operating positions.

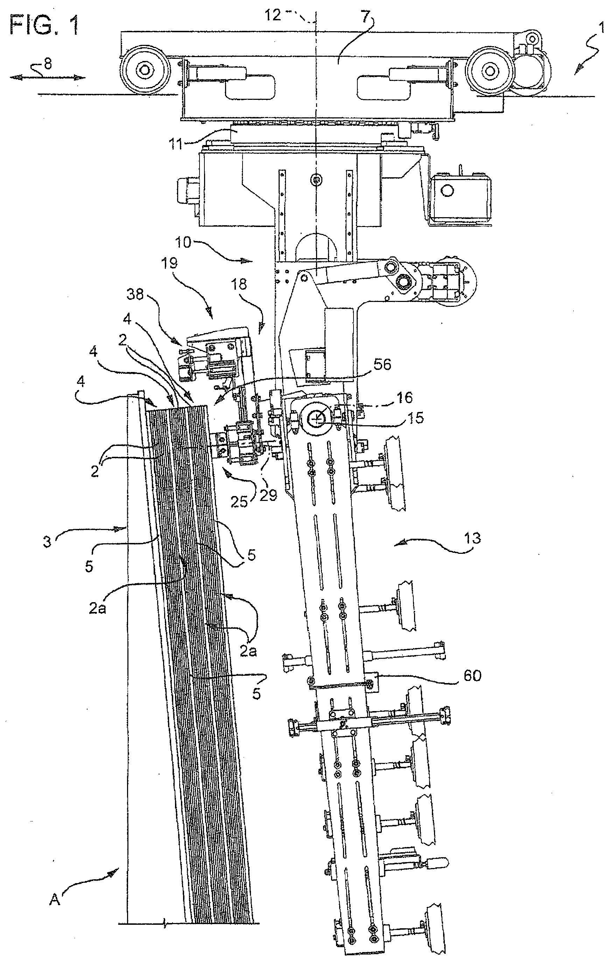

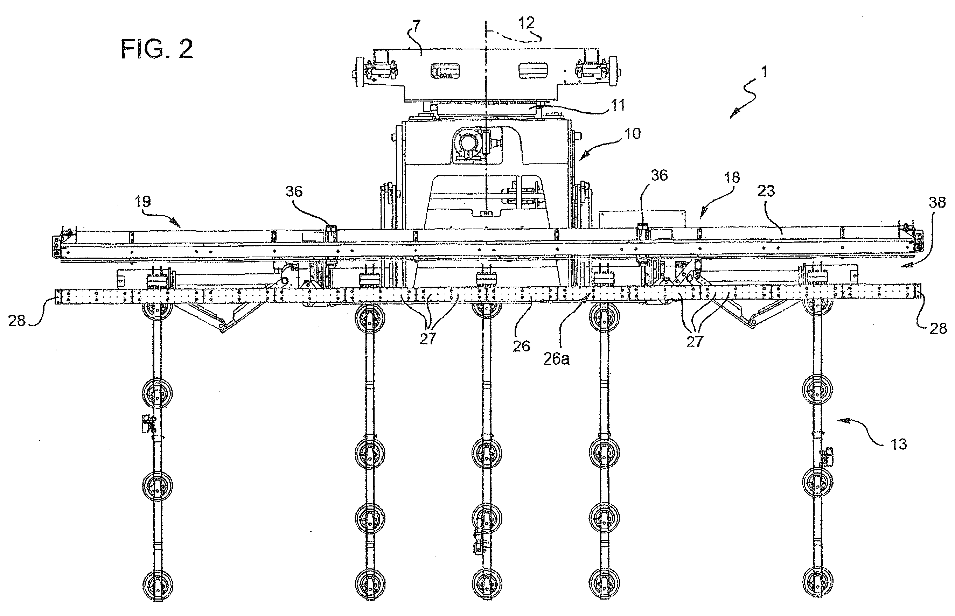

Number 1 in Figures 1 and 2 indicates as a whole a pickup and handling device for removing sheets 2 of glass off a rack 3. Rack 3 is located at a sheet pickup station A and, in the example shown, supports three packs 4 of sheets 2, separated by a number of spacers 5. In the example shown, spacers 5 are in the form of elongated vertical parallel strips of paper material, either equally or randomly spaced on the main surfaces 2a of sheets 2.

Device 1 comprises a trolley 7 powered to move back and forth in a travelling direction 8; and a supporting frame 10 extending downwards from trolley 7 and connected to trolley 7 by a pivot 11 to rotate back and forth with respect to trolley 7 about a vertical axis of rotation 12.

Device 1 also comprises a suction cup gripping device 13, which engages main surfaces 2a of sheets 2 and is connected to supporting frame 10 by a powered shaft 15 (Figure 1) to oscillate with respect to supporting frame 10 about a hinge axis 16 perpendicular to axis of rotation 12.

As shown in Figures 1 and 2, an elongated supporting frame 18 is connected integrally and releasably to shaft 15, and supports a pickup assembly 19 for removing spacers 5 off surfaces 2a of the relative sheets.

With reference to Figures 2 to 6, supporting frame 18 extends parallel to axis 16, and comprises two connecting portions 20 spaced apart along axis 16 and connected integrally and releasably to intermediate portions of shaft 15; and an upright 22 for and extending upwards from each portion 20.

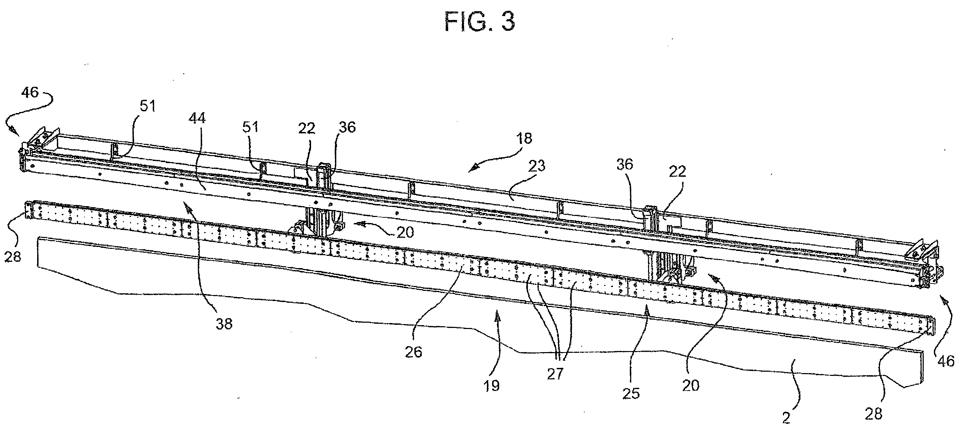

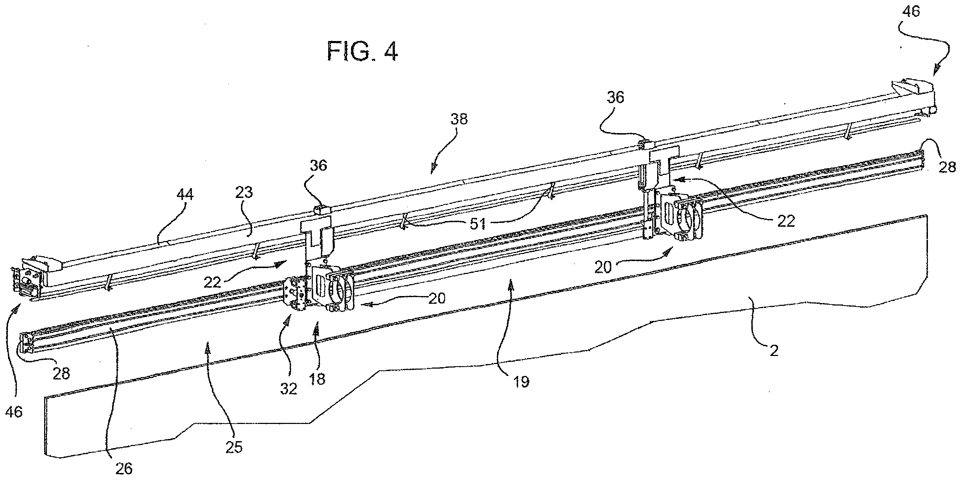

The top ends of uprights 22 are connected to each other by a tubular cross member 23, which projects beyond uprights 22 in a direction parallel to axis 16 and perpendicular to axis 12 and direction 8, and along the whole width of sheet 2 (Figures 3 and 4).

At the bottom ends of uprights 22, assembly 18 comprises a pickup device 25, in turn comprising a pickup and shift bar 26, which extends parallel to tubular cross member 23 and has a number of grip spikes 27, which project from a main surface 26a of bar 26, facing and parallel to surfaces 2a of sheets 2, and in use are inserted at least partly into spacers 5.

At opposite axial ends of bar 26, two locators 28 project from surface 26a by an amount greater than the length of spikes 27, and each terminate with a flat supporting surface that rests against main surface 2a of sheet 2 to prevent spikes 27 from contacting main surface 2a.

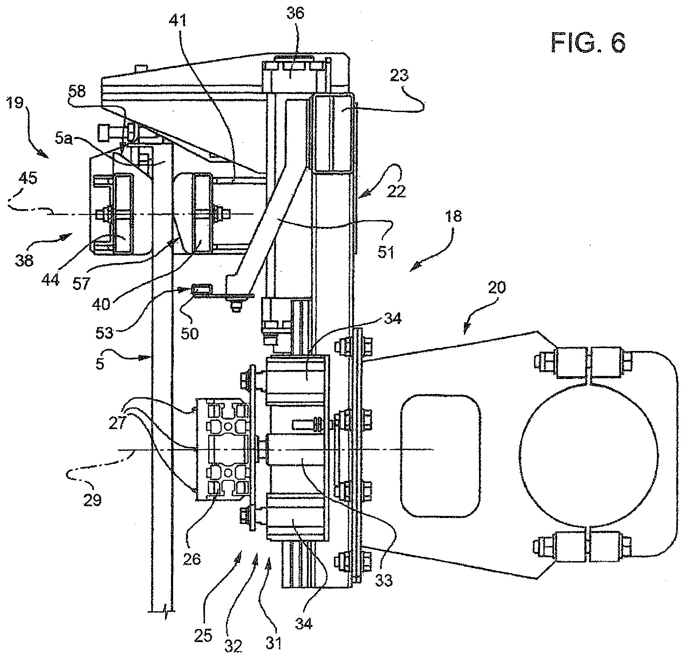

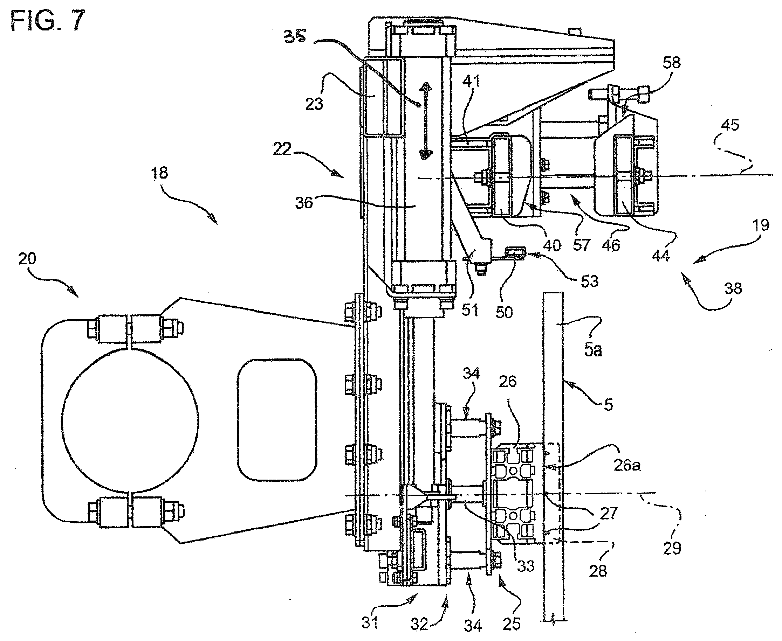

Together with spikes 27, bar 26 is movable, parallel to itself and in a direction 29 perpendicular to axis 16 and to main surfaces 2a of sheets 2, between a withdrawn rest position (Figure 6), and a forward pickup position (Figure 7), in which spikes 27 are inserted into spacers 5 by an actuating assembly 31. Actuating assembly 31 forms part of device 25 and comprises two thrust devices 32, each of which is located close to a respective upright 22, and comprises a guide-slide assembly 33, and two pressure-controlled pneumatic linear actuators 34 on opposite sides of assembly 33.

Each thrust device 32 is connected to relative upright 22 to slide in a direction 35 parallel to surface 2a and perpendicular to direction 29, and is movable back and forth by a respective linear actuator 36 to move bar 26 between a lowered position (Figure 7) to pick up spacers 5, and a raised position (Figure 6) to release spacers 5.

As shown in the drawings, pickup assembly 19 also comprises a movable-jaw gripping and retaining device 38 above bar 26 and connected to the top ends of the uprights, adjacent to tubular cross member 23.

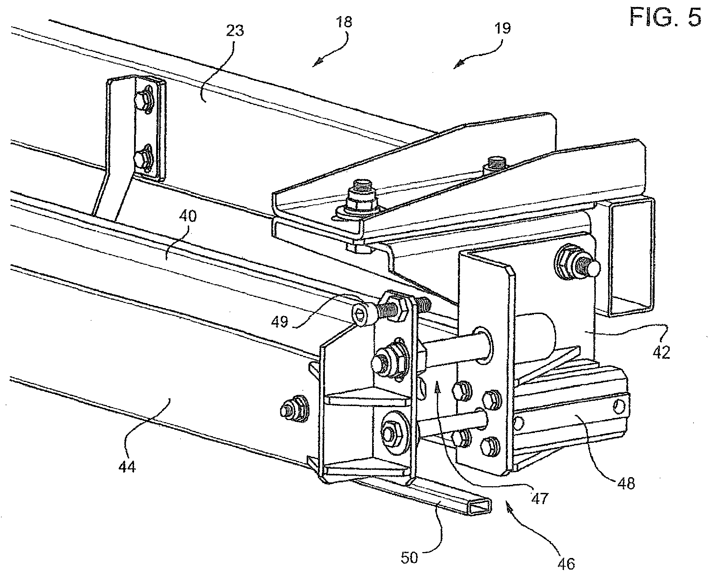

With reference to Figures 5, 6 and 7, gripping and retaining device 38 comprises a fixed grip bar 40 parallel to cross member 23 and bar 26, and connected integrally to cross member 23 by two end brackets 42 and intermediate brackets 41. Device 38 also comprises a movable grip bar 44 facing and parallel to bar 40, and movable, with respect to bar 40 and in a direction 45 parallel to direction 29, between a withdrawn grip position (Figure 6) and a detached rest position (Figure 7) by two actuating devices 46, each fitted to a respective end bracket 42 welded to bar 40. As shown in Figure 5, each device 46 forms part of device 38, and comprises a guide-slide assembly 47, a pneumatic linear actuator 48, and a screw-nut screw stop 49.

A stop bar 50, between and parallel to bars 40 and 26, is connected integrally and in a fixed position to cross member 23 by a number of brackets 51, and has a front surface 53, which is located further back, towards uprights 22, than the front gripping surface of bar 40, and is located further forward than the free ends of spikes 27 when bar 26 is in the withdrawn rest position.

Operation of device 1 will now be described as of the Figure 1 condition, in which : packs 4 of sheets 2 for pickup are located on rack 3; a number of spacers 5 are located on main surface 2a of the first sheet 2 in the first pack 4 for pickup; pickup assembly 19 is set to a spacer pickup position, in which it partly surrounds the top edge 56 of the first pack 4; bar 26 is set to the lowered withdrawn position; and bar 44 is set to the detached position.

As of the above condition, bar 26 is moved towards and pushed against spacers 5 by actuators 34, which operate like elastic springs to gradually insert spikes 27 into spacers 5 until locators 28 are positioned close to or contacting surface 2a of sheet 2. At this point, actuators 36 are operated to move bar 26 and gradually slide all the spacers 5 simultaneously, on surface 2a of sheet 2 and in the same initial relative positions, towards gripping and retaining device 38. When bar 26 reaches the raised position, respective end portions 5a of spacers 5 project from the top edge of sheet 2, and are inserted between bars 40 and 44, also with the aid of a sloping lead-in surface 57 on bar 40 (Figures 6, 7). At this point, bar 44 is moved into the withdrawn position, end portions 5a are retained simultaneously in fixed relative positions between bars 40 and 44, and bar 26 is restored to the withdrawn position to gradually withdraw spikes 27 from spacers 5. If the spikes do not withdraw immediately or completely, withdrawal of bar 26 pulls spacers 5 against stop bar 50, which arrests spacers 5 and allows bar 26 to continue into the withdrawn position.

At this point, trolley 7 is operated to transfer spacers 5 simultaneously from sheet 2 to an unloading area, some distance from rack 3, where bar 44 is moved back into the forward position to release the spacers. At this stage, release of end portions 5a is assisted by a bevel 58 on bar 44, which prevents spacers 5 from jamming as they are released. Alternatively, for safer retention of spacers 5 as they are removed, bar 26 is not moved into the withdrawn position until it reaches the unloading area. Frame 10 and gripping device 13 are then rotated 180° about axis 12, and sheets 2 are removed successively by gripping device 13 until a television camera or sensor 60 (Figure 1) or a pickup operative detects spacers 5 on the first sheet of the next pack. These spacers are also removed by rotating frame 10 and device 13 back about axis 12, and repeating the pickup, retaining, removal, and release steps described above.

Unlike known solutions, device 1 described therefore provides for removing the spacers in controlled manner, i.e. by retaining the spacers pending release in a predetermined area away from rack 3.

This is due to the fact that, throughout the removal operation, the spacers, regardless of how they are arranged on the sheet, are maintained in their original relative positions - first by a simple spiked bar and subsequently by straightforward grippers and bars - thus preventing tearing, jamming or entanglement, i.e. random movement, of the spacers from complicating removal and/or cluttering the sheet pickup station.

Clearly, changes may be made to device 1 and pickup assembly 19 as described herein. In particular, bar 26 may comprise retainers other than spikes 27, and device 38 may be designed differently from the one shown by way of example.

Also, assembly 19 may be connected to a sheet pickup device differing widely in design from device 1 described, or may be fitted to a manipulator of its own, independent from the sheet pickup device.

## Claims

1. A method of removing spacers (5) off a main surface (2a) of a sheet (2) of glass, the method comprising the steps of simultaneously sliding said spacers (5), on said main surface (2a) and in fixed relative positions, into a position in which respective end portions (5a) of said spacers (5) project from a peripheral edge of said sheet (2); retaining said end portions (5a) firmly; and removing said spacers from said sheet (2) transferring the spacers (5) simultaneously from said sheet (2) to an unloading area before releasing said end portions (5a).

2. A method as claimed in Claim 1, **characterized in that** said spacers (5) are slid on said sheet (2) by moving a number of spikes (27), projecting from a pickup bar (26), towards said main surface (2a) and said spacers (5), and by inserting said spikes at least partly into said spacers (5).

3. A method as claimed in Claim 2, **characterized in that** said spacers (5)are slid simultaneously on said main surface by moving said pickup bar (26) parallel to said main surface (2a).

4. A method as claimed in any one of the foregoing Claims, **characterized in that** said end portions (5a) are retained and said spacers removed from said sheet by gripping said end portions (5a) simultaneously between two jaws (40; 44), and moving said jaws away from said sheet (2).

5. A pickup assembly (19) for removing spacers (5) off a main surface of a sheet (2) of glass, the assembly (19) comprising a supporting frame (18); a bar (26) having a number of spikes (27) projecting from said bar (26) and insertable at least partly into said spacers (5); first actuating means (31) for moving said bar (26) and said spikes in a first direction (29) with respect to said supporting frame (18); releasable retaining means (38) for simultaneously retaining end portions (5a) of said spacers (5); and second actuating means (36) for moving said bar (26), with respect to said supporting frame (18), to and from said retaining means (38), and a trolley (7) to transfer the releasable retaining means (38) and the spacers (5) simultaneously from said sheet (2) to an unloading area.

6. An assembly as claimed in Claim 5, **characterized in that** said second actuating means (36) move said bar and said spikes in a second direction perpendicular to said first direction (29).

7. An assembly as claimed in Claim 5 or 6, **characterized in that** said retaining means (38) comprise two elongated jaws (40) (44) of a length equal to the width of said sheet (2); and actuating means (46) for moving the jaws with respect to each other in an open/close direction (45) parallel to said first direction (29).

8. An assembly as claimed in Claim 7, **characterized in that** said jaws are elongated and parallel to said bar (26); at least one of said jaws has at least one sloping lead-in surface (57) to aid insertion of said end portions (5a) between said jaws; and at least one of said jaws has at least one sloping surface to aid detachment of the spacers when the jaws are opened.

9. An assembly as claimed in Claim 8, **characterized in that** said actuating means (46) comprise two actuators connected to opposite axial ends of said jaws.

10. An assembly as claimed in any one of Claims 5 to 9, **characterized in that** said bar (26) is fitted with supporting members (28) which rest on the main surface (2a) of said sheet (2); said supporting members (28) projecting from said bar (26) by an amount greater than the length of said spikes (27).

11. An assembly as claimed in Claim 7, **characterized in that** one (40) of said jaws is fixed with respect to said supporting frame; and by also comprising a stop bar parallel to the fixed jaw and fixed to said supporting frame further back towards said supporting frame than said jaw.

12. A sheet glass pickup and handling device comprising a trolley (7) movable in a travelling direction (8); a supporting frame (10); a pivot (11) connecting the supporting frame (10) to the trolley (7) to rotate about a vertical axis (12) of rotation; and a suction cup gripping device (13) connected to said supporting frame by a powered shaft (15) to rotate with respect to the supporting frame about a hinge axis (16) perpendicular to said axis (12) of rotation; **characterized by** also comprising a pickup assembly (19), as claimed in Claim 5, for removing spacers (5) off a main surface of a sheet (2) of glass; the supporting frame of said pickup assembly being fixed stably to said powered shaft.

## Patentansprüche

1. Verfahren zum Entfernen von Abstandhaltern (5) von einer Hauptfläche (2a) einer Glasplatte (2), wobei das Verfahren die folgenden Schritte aufweist: gleichzeitiges gleitendes Verschieben der Abstandhalter (5) auf der Hauptfläche (2a) und in festen relativen Positionen in eine Position, in welcher jeweilige Endbereiche (5a) der Abstandhalter (5) über einen Umfangsrand der Platte (2) hinaus ragen; festes Halten der Endbereiche (5a); und Entfernen der Abstandhalter (5) von der Platte (2) durch gleichzeitiges Überführen der Abstandhalter (5) von der Platte (2) zu einem Abladebereich vor dem Freigeben der Endbereiche (5a).

2. Verfahren nach Anspruch 1, **dadurch gekennzeichnet, dass** die Abstandhalter (5) auf der Platte (2) gleitend bewegt werden, indem eine Anzahl von Dornen (27), welche von einer Aufnahmeleiste (26) abstehen, in Richtung der Hauptfläche (2a) und der Abstandhalter (5) bewegt wird, und indem die Dorne (27) zumindest teilweise in die Abstandhalter (5) eingeführt werden.

3. Verfahren nach Anspruch 2, **dadurch gekennzeichnet, dass** die Abstandhalter (5) gleichzeitig gleitend auf der Hauptfläche bewegt werden, indem die Aufnahmeleiste (26) parallel zur Hauptfläche (2a) bewegt wird.

4. Verfahren nach einem der vorhergehenden Ansprüche, **dadurch gekennzeichnet, dass** die Endbereiche (5a) gehalten und die Abstandhalter von der Platte entfernt werden, indem die Endbereiche (5a) gleichzeitig zwischen zwei Backen (40; 44) gegriffen werden und die Backen von der Platte (2) weg bewegt werden.

5. Aufnahmeanordnung (19) zum Entfernen von Abstandhaltern (5) von einer Hauptfläche einer Glasplatte (2), wobei die Anordnung (19) aufweist: einen Stützrahmen (18); eine Leiste (26) mit einer Anzahl von Dornen (27), welche von der Leiste (26) abstehen und zumindest teilweise in die Abstandhalter (5) einführbar sind; eine erste Betätigungseinrichtung (31) zum Bewegen der Leiste (26) und der Dornen in eine erste Richtung (29) in Bezug zum Stützrahmen (18); eine lösbare Halteeinrichtung (38) zum gleichzeitigen Halten von Endbereichen (5a) der Abstandhalter (5); und eine zweite Betätigungseinrichtung (36) zum Bewegen der Leiste (26) zu und von der Halteeinrichtung (38) in Bezug auf den Stützrahmen (18), und einen Wagen (7) zum gleichzeitigen Überführen der lösbaren Halteeinrichtung (38) und der Abstandhalter (5) von der Platte (2) zu einem Abladebereich.

6. Anordnung nach Anspruch 5, **dadurch gekennzeichnet, dass** die zweite Betätigungseinrichtung (36) die Leiste und die Dornen in eine zu der ersten Richtung (29) senkrechte zweite Richtung bewegt.

7. Anordnung nach Anspruch 5 oder 6, **dadurch gekennzeichnet, dass** die Halteeinrichtung (38) aufweist: zwei langgestreckte Backen (40) (44) mit einer Länge, die gleich der Breite der Platte (2) ist; und eine Betätigungseinrichtung (46) zum Bewegen der Backen in Bezug zueinander in einer zu der ersten Richtung (29) parallelen Öffnungs-/ Schließrichtung (45).

8. Anordnung nach Anspruch 7, **dadurch gekennzeichnet, dass** die genannten Backen langgestreckt und parallel zu der Leiste (26) sind; mindestens eine der Backen mindestens eine geneigte Vorderfläche (57) aufweist, um das Einführen der Endbereiche (5a) zwischen die Backen zu unterstützen; und mindestens eine der Backen mindestens eine geneigte Fläche aufweist, und das Lösen der Abstandhalter zu unterstützen, wenn die Backen geöffnet werden.

9. Anordnung nach Anspruch 8, **dadurch gekennzeichnet, dass** die Betätigungseinrichtung (46) zwei mit axial entgegengesetzten Enden der Backen verbundene Aktuatoren aufweist.

10. Anordnung nach einem der Ansprüche 5 bis 9, **dadurch gekennzeichnet, dass** die Leiste (26) mit Stützelementen (28) versehen ist, welche auf der Hauptfläche (2a) der Platte (2) aufliegen; wobei die Stützelemente (28) um einen Betrag von der Leiste (26) abstehen, der größer als die Länge der Dorne (27) ist.

11. Anordnung nach Anspruch 9, **dadurch gekennzeichnet, dass** eine (40) der Backen in Bezug auf den Stützrahmen fest steht; und ferner durch eine Anschlagleiste, die parallel zu der feststehenden Backe verläuft und an dem Stützrahmen weiter hinten in Richtung des Stützrahmens befestigt ist als die Backe.

12. Vorrichtung zum Aufnehmen und Handhaben von Glasplatten, mit einem in einer Verfahrrichtung (8) bewegbaren Wagen (7) einem Stützrahmen (10); einer Schwenkeinrichtung (11), welche den Stützrahmen (10) mit dem Wagen (7) zum Drehen um eine vertikale Drehachse (12) verbindet; und einer Saugnapf-Greifvorrichtung (13), die über eine angetriebene Welle (15) mit dem Stützrahmen verbunden ist, um in Bezug auf den Stützrahmen um eine zu der Drehachse (12) senkrechte Gelenkachse (16) zu drehen; **dadurch gekennzeichnet, dass** sie ferner eine Aufnahmeanordnung (19) nach Anspruch 5 zum Entfernen von Abstandhaltern (5) von einer Hauptfläche einer Glasplatte (2) aufweist; wobei der Stützrahmen der Aufnahmeanordnung stabil an der angetriebenen Welle angebracht ist.

## Revendications

1. Procédé de retrait de séparateurs (5) d'une surface principale (2a) d'une feuille de verre (2), le procédé comportant les étapes consistant à glisser simultanément lesdits séparateurs (5) sur ladite surface principale (2a), et dans une position relative fixe, vers une position dans laquelle les parties d'extrémités (5a) respectives desdits séparateurs (5) sont protubérants par rapport au bord périphérique de ladite feuille (2) ; à retenir fermement lesdites parties d'extrémités (5a); et à retirer lesdits séparateurs de ladite feuille (2) en transférant simultanément les séparateurs (5) de ladite feuille (2) vers une zone de déchargement avant de relâcher lesdites parties d'extrémités (5a).

2. Procédé selon la revendication 1, **caractérisé en ce que** lesdits séparateurs (5) sont glissés sur ladite feuille (2) en déplaçant une série de pics (27), qui se dressent par rapport à une barre de saisie (26) vers ladite surface principale (2a) et lesdits séparateurs (5), et en insérant lesdits pics au moins partiellement dans lesdits séparateurs (5).

3. Procédé selon la revendication 2, **caractérisé en ce que** lesdits séparateurs (5) sont glissés simultanément sur ladite surface principale en déplaçant ladite barre de saisie (26) parallèlement à ladite surface principale (2a).

4. Procédé selon l'une quelconque des revendications précédentes, **caractérisé en ce que** lesdites parties d'extrémités (5a) sont retenues et lesdits séparateurs retirés de la feuille en saisissant lesdites parties d'extrémités (5a) simultanément entre deux mâchoires (40; 44), et en déplaçant lesdites mâchoires par rapport à ladite feuille (2).

5. Assemblage de saisie (19) pour retirer des séparateurs (5) de la surface principale d'une feuille de verre (2), cet assemblage (19) comportant un cadre de support (18); une barre (26) comportant une série de pics (27) qui se dressent par rapport à ladite barre (26) et peuvent s'insérer au moins partiellement dans lesdits séparateurs (5); des premiers moyens d'actionnement (31) pour déplacer ladite barre (26) et lesdits pics dans une première direction (29) par rapport audit cadre de support (18); des moyens de retenue amovibles (38) pour retenir simultanément les parties d'extrémités (5a) desdits séparateurs (5); et des seconds moyens d'actionnement (36) pour déplacer ladite barre (26), par rapport audit cadre de support (18), vers et en provenance desdits moyens de retenue (38), et une perche (7) pour transférer les moyens de retenue amovibles (38) et les séparateurs (5) simultanément de ladite feuille (2) vers une zone de déchargement.

6. Assemblage selon la revendication 5, **caractérisé en ce que** lesdits seconds moyens d'actionnement (36) déplacent ladite barre et lesdits pics dans une seconde direction perpendiculaire à ladite première direction (29).

7. Assemblage selon les revendications 5 ou 6, **caractérisé en ce que** lesdits moyens de retenue (38) comportent deux mâchoires allongées (40) (44) dont la longueur est égale à la largeur de ladite feuille (2); et des moyens d'actionnement (46) pour déplacer les mâchoires l'une par rapport à l'autre dans une direction (45) d'ouverture/fermeture parallèle à ladite première direction (29).

8. Assemblage selon la revendication 7, **caractérisé en ce que** lesdites mâchoires sont allongées parallèlement à ladite barre (26); au moins une desdites mâchoires comporte au moins une surface de guidage (57) inclinée pour aider l'insertion desdites parties d'extrémités (5a) entre lesdites mâchoires ; et au moins une desdites mâchoires a au moins une surface inclinée pour aider la libération desdits séparateurs lorsque les mâchoires sont ouvertes.

9. Assemblage selon la revendication 8, **caractérisé en ce que** lesdits moyens d'actionnement (46) comportent deux actionneurs disposés aux deux extrémités axiales opposées desdites mâchoires.

10. Assemblage selon l'une quelconque des revendications 5 à 9, **caractérisé en ce que** ladite barre (26) est ajustée avec des organes de support (28) qui sont en appui sur la surface principale (2a) de la feuille (2) ; lesdits organes de support (28) se projetant depuis ladite barre (26) d'une quantité supérieure à la longueur desdits pics (27).

11. Assemblage selon la revendication 7, **caractérisé en ce qu'**une (40) desdites mâchoires est fixée par rapport audit cadre de support ; et **en ce qu'**il comprend également une barre d'arrêt parallèle à la mâchoire fixe et fixée audit cadre de support plus loin en arrière vers le cadre de support que vers ladite mâchoire.

12. Dispositif de préhension et de manipulation de feuilles de verre, comportant une perche (7) mobile dans une direction de circulation (8) ; un cadre de support (10) ; un pivot (11) qui couple le cadre de support (10) à la perche (7) pour tourner autour d'un axe de rotation verticale (12) ; et un dispositif à ventouse (13) couplé audit cadre de support par un arbre motorisé (15) pour tourner par rapport au cadre de support autour d'un axe (16) perpendiculaire audit axe de rotation (12) ;
**caractérisé en ce qu'**il comporte également un assemblage de préhension (19) selon la revendication 5, pour retirer les séparateurs (5) d'une surface principale d'une feuille de verre (2) ; le cadre de support dudit assemblage étant fixé de façon stable audit arbre motorisé.
